# EUROPEAN PATENT APPLICATION

(11) **EP 1 840 733 A1**
(43) Date of publication of application: **03.10.2007**
(21) Application number: 04807566.7
(22) Date of filing: 22.12.2004
(51) Int. Cl.: G06F 9/06, G06F 9/54

(54) **VIRTUAL MACHINE MANAGEMENT PROGRAM, AND VIRTUAL MACHINE MANAGEMENT METHOD**

(71) Applicant: Fujitsu Ltd., Kawasaki-shi, Kanagawa 211-8588 (JP)
(72) Inventor: MUSHA, Yuichi, c/o Fujitsu Ltd.,, Kawasaki-shi, Kanagawa 2118588 (JP)
(74) Representative: Stebbing, Timothy Charles
(86) International application number: PCT/JP2004/019209
(87) International publication number: WO 2006/067841

(57) **Abstract**

A virtual machine the version number of which is designated in advance can be made to execute a program distributed by a server computer.

A setting file acquisition section (1e) acquires setting files (2aa) and (2ba) from a server computer (2). A virtual machine association section (1f) registers the association of identification information with version numbers in a management table on the basis of the setting files (2aa) and (2ba) acquired by the setting file acquisition section (1e). An execution control section (1g) then acquires distribution object programs (2ab) and (2bb) from the server computer (2), refers to the management table, and selects virtual machines the version numbers of which correspond to the identification information for the distribution object programs (2ab) and (2bb) from among virtual machines (1a), (1b), (1c), and (1d). The selected virtual machines execute the acquired distribution object programs (2ab) and (2bb).

## Description

### TECHNICAL FIELD

This invention relates to a virtual machine management program and a virtual machine management method for making a virtual machine execute a program downloaded from a server computer and, more particularly, to a virtual machine management program and a virtual machine management method for managing a version number in the case of a version number of a virtual machine being updated at any time.

### BACKGROUND ART

At present there is a technique for distributing software from a server computer having the function of, for example, a Web server via a network and for making a client computer execute the software (including a program and data related thereto). For example, a program described in the Java (registered trademark) language resides on the server computer. A Web browser on the client computer downloads and starts the Java language program. By doing so, the server computer can provide not only content but also a service which answers a user's personal needs to the client computer.

Usually software provided via a wide area network such as the Internet must correspond to an OS which can run on a client. Various OSes, such as UNIX (registered trademark) and Windows (registered trademark), are used on computers. One method for developing software to be provided by a server is to generate programs corresponding to all of the platforms (OSes). However, the development of such programs requires much labor.

Accordingly, in the case of a program language, such as Java, used on the assumption that a program is distributed via a network, a program that absorbs a difference in platform is prepared on the client side. A function realized by executing such a program is called a virtual machine (VM). For example, the Java Runtime Environment (JRE) is prepared for the Java language.

The virtual machine has the function of converting a distributed program into a format (machine language) which a platform can interpret. Accordingly, when software to be distributed from the server side is developed, one program which can be executed by the virtual machine is generated. There is no need to generate various kinds of programs. As a result, the manpower burden of development is reduced.

Various applied techniques have been devised for Java applications.

For example, a technique for limiting server computers to which a client computer can have access by executing a Java application has been devised. To be concrete, the internet protocol (IP) address of another machine (server) and a port number are managed in a downloaded Java language program as identifiers. Access to a resource on a network which is requested by executing the Java language program is permitted only if the IP address of the resource and the port number are registered in advance (see, for example, patent document 1).

If an application which can be accessed via a network is installed on a server, a port number is assigned to the application. If the number of applications installed on the server increases, a port number once assigned to an existing application may be changed to avoid duplication of the port number.

With the method described in the patent document 1, however, the following problem arises. If a port number corresponding to a program to be downloaded is changed, the program is recognized as another Java language program in spite of the same Java language program.

Accordingly, techniques for associating virtual machines with programs have been devised. For example, to prevent the unlawful use of a program downloaded, a technique for managing a license for the program has been devised. According to this technique, a license file which holds product information encrypted is created on a Web server and a client decodes the license file. If the product information obtained by decoding the license file is the same as product information on the program downloaded, then the program is executed (see, for example, patent document 2).

With this technique, a program is identified by using product information. Therefore, even if a port number is changed, the program can be identified.

Patent Document 1: International Publication Pamphlet No. 2002/042920

Patent Document 2: Japanese Patent Laid-Open Publication No. 2004-54864

### DISCLOSURE OF THE INVENTION

### PROBLEM TO BE SOLVED

By the way, a proper change is made in a virtual machine with technological innovation. A virtual machine is changed in this way, so plural version numbers are given to some of virtual machines distributed via a network. In such cases, there is no guarantee that a program which is intended to operate in an old version virtual machine normally operates in the latest version virtual machine.

However, if the JREs which differ from one another in version number exist, a client cannot associate the JREs with Java language programs by using the conventional techniques. As a result, a Java language program which operates in some version of the Java VM (JRE) on the client side may perform unpredictable operation in another version of the Java VM (JRE). Accordingly, the Java language program must automatically designate the JRE to be used.

The present invention was made under the background circumstances described above. An object of the present invention is to provide a virtual machine management program and a virtual machine management method capable of making a virtual machine the version number of which is designated in advance execute a program distributed by a server computer.

### MEANS TO SOLVE THE PROBLEM

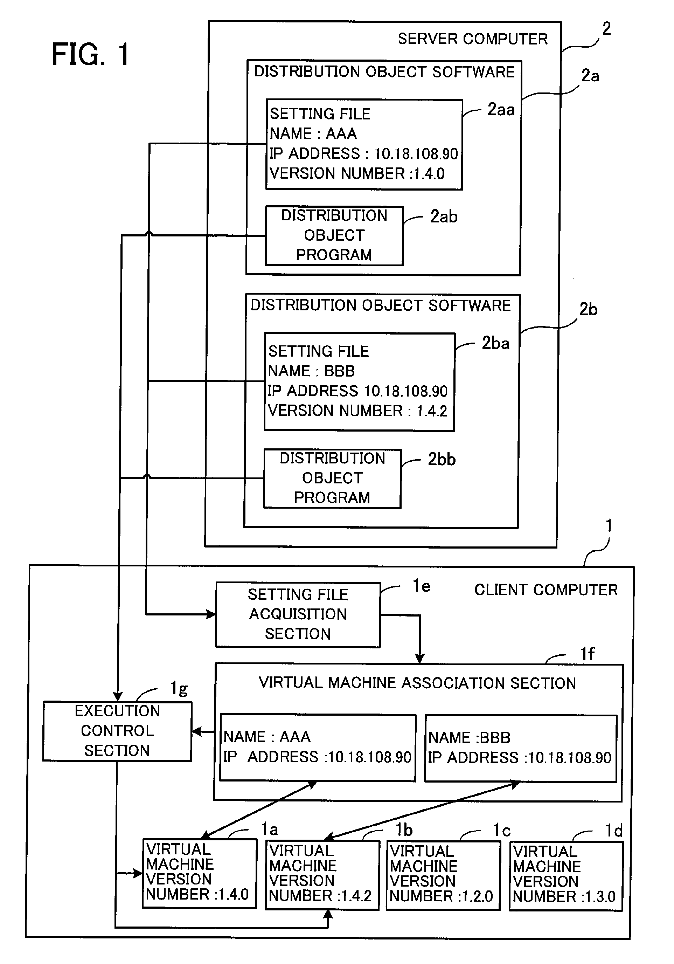

In order to solve the above problem, a virtual machine management program having a function shown in Fig. 1 is provided by the present invention. The virtual machine management program according to the present invention is used for making a virtual machine execute a program downloaded from a server computer. By making a computer execute the virtual machine management program, the functions shown in Fig. 1 are realized.

A setting file acquisition section 1e acquires a setting file 2aa including identification information for a distribution object program 2ab and a version number of a virtual machine to be used for executing the distribution object program 2ab and a setting file 2ba including identification information for a distribution object program 2bb and a version number of a virtual machine to be used for executing the distribution object program 2bb from a server computer 2. A virtual machine association section 1f registers the association of the identification information with the version numbers in a management table on the basis of the setting files 2aa and 2ba acquired by the setting file acquisition section 1e. An execution control section 1g acquires the distribution object programs 2ab and 2bb from the server computer 2, refers to the management table, selects the virtual machines the version numbers of which correspond to the identification information for the distribution object programs 2ab and 2bb from among virtual machines 1a, 1b, 1c, and 1d which differ from one another in version number, and making the selected virtual machines execute the acquired distribution object programs 2ab and 2bb.

With a computer which executes the above virtual machine management program, the setting file acquisition section 1e acquires the setting files 2aa and 2ba from the server computer 2. The virtual machine association section 1f then registers the association of the identification information with the version numbers in the management table on the basis of the setting files 2aa and 2ba acquired by the setting file acquisition section 1e. The execution control section 1g acquires the distribution object programs 2ab and 2bb from the server computer 2, refers to the management table, selects virtual machines the version numbers of which correspond to the identification information for the distribution object programs 2ab and 2bb from among the virtual machines 1a, 1b, 1c, and 1d, and makes the selected virtual machines execute the acquired distribution object programs 2ab and 2bb.

### EFFECT OF THE INVENTION

As has been described, in the present invention the version number of a virtual machine to be used for executing a distribution object program is associated in advance with identification information for the distribution object program. When the distribution object program is acquired, the virtual machine the version number of which is associated with the identification information for the distribution object program is made to execute the distribution object program. As a result, even if virtual machines which differ from one another in version number reside on a client computer, the distribution object program can be executed correctly by using the virtual machine the version number of which is intended at the time of generating the distribution object program.

The above and other objects, features and advantages of the present invention will become apparent from the following description when taken in conjunction with the accompanying drawings which illustrate preferred embodiments of the present invention by way of example.

### BRIEF DESCRIPTION OF THE DRAWINGS

[Fig. 1] A schematic view of the present invention applied to an embodiment.
[Fig. 2] A view showing an example of the structure of a system according to the embodiment.
[Fig. 3] A view showing an example of the hardware configuration of a client computer used in the embodiment of the present invention.
[Fig. 4] A block diagram showing the functional structure of each computer.
[Fig. 5] A view showing an example of a management table.
[Fig. 6] A view showing association set in the management table.
[Fig. 7] A sequence diagram showing a process performed between a client computer and a server computer.
[Fig. 8] A flow chart showing the procedure of a process performed by the client computer.
[Fig. 9] A view showing association after the update of program files.
[Fig. 10] A flow chart showing the procedure of the process of automatically uninstalling a virtual machine.

### BEST MODE FOR CARRYING OUT THE INVENTION

An embodiment of the present invention will now be described with reference to the drawings.

An overview of the present invention applied to the embodiment will be given first and then the contents of the embodiment will be described concretely.

Fig. 1 is a schematic view of the present invention applied to the embodiment. A client computer 1 acquires distribution object software 2a and distribution object software 2b from the server computer 2 via a network and executes the distribution object software 2a and the distribution object software 2b. The distribution object software 2a includes the setting file 2aa and the distribution object program 2ab and the distribution object software 2b includes the setting file 2ba and the distribution object program 2bb. The setting file 2aa includes the identification information for the distribution object program 2ab and the version number of the virtual machine to be used for executing the distribution object program 2ab. The identification information includes the name of the distribution object program 2ab (described in, for example, the distribution object program 2ab) and server identification information on the network for the server computer 2 (IP address "10.18.108.90" of the server computer 2, for example). The setting file 2ba includes the identification information for the distribution object program 2bb and the version number of the virtual machine to be used for executing the distribution object program 2bb. The identification information includes the name of the distribution object program 2bb (described in, for example, the distribution object program 2bb) and server identification information on the network for the server computer 2 (IP address "10.18.108.90" of the server computer 2, for example).

The client computer 1 includes the virtual machines 1a through 1d, the setting file acquisition section le, the virtual machine association section 1f, and the execution control section 1g.

The setting file acquisition section 1e acquires the setting files 2aa and 2ba from the server computer 2. The setting file acquisition section 1e passes the setting files 2aa and 2ba it acquired to the virtual machine association section 1f.

The virtual machine association section 1f registers the association of the identification information with the version numbers in the management table on the basis of the setting files 2aa and 2ba acquired by the setting file acquisition section 1e. In the example shown in Fig. 1, the identification information including the name "AAA" and the IP address "10.18.108.90" is associated with the virtual machine 1a the version number of which is "1.4.0" on the basis of the setting file 2aa. The identification information including the name "BBB" and the IP address "10.18.108.90" is associated with the virtual machine 1b the version number of which is "1.4.2" on the basis of the setting file 2ba. The execution control section 1g acquires the distribution object programs 2ab and 2bb from the server computer 2, refers to the management table, and selects virtual machines the version numbers of which correspond to the identification information for the distribution object programs 2ab and 2bb from among the virtual machines 1a, 1b, 1c, and 1d the version numbers of which differ from one another.

For example, when the execution control section 1g acquires the distribution object program 2ab, the execution control section 1g recognizes the name "AAA" from the contents of the distribution object program 2ab. In addition, the execution control section 1g recognizes the IP address "10.18.108.90" of the server computer 2 from, for example, header information included in a packet which the execution control section 1g accepts at the time of acquiring the distribution object program 2ab. The execution control section 1g then selects the virtual machine 1a associated with a combination of the name "AAA" and the IP address "10.18.108.90".

In addition, the execution control section 1g makes the selected virtual machine execute the distribution object program it acquired. That is to say, the execution control section 1g starts the selected virtual machine and requests the selected virtual machine to execute the distribution object program it acquired.

With a computer which executes the above virtual machine management program, the setting file acquisition section 1e acquires the setting files 2aa and 2ba from the server computer 2. The virtual machine association section If then registers the association of the identification information with the version numbers in the management table on the basis of the setting files 2aa and 2ba acquired by the setting file acquisition section 1e. After that, the execution control section 1g acquires the distribution object programs 2ab and 2bb from the server computer 2 and selects virtual machines the version numbers of which correspond to the identification information for the distribution object programs 2ab and 2bb from among the virtual machines 1a, 1b, 1c, and 1d. The execution control section 1g then makes the selected virtual machines execute the acquired distribution object programs.

As a result, even if the virtual machines 1a through 1d the version numbers of which differ from one another reside on the client computer 1, the distribution object programs 2ab and 2bb can be executed by using virtual machines the version numbers of which are intended at the time of generating the distribution object programs 2ab and 2bb. Therefore, processes described in the distribution object programs can correctly be performed on the client computer.

Virtual machines the version numbers of which are intended for the acquired distribution object programs may not be installed on the client computer 1. In this case, a distribution program for a virtual machine the version number of which is not yet installed is acquired via the network. New version virtual machines can be installed on the client computer 1 on the basis of the acquired distribution program.

There are cases where a setting file regarding identification information that is already registered in the management table is newly acquired. In these cases, the virtual machine association section 1f changes a version number associated with the identification information in the management table on the basis of the setting file newly acquired.

Changing a version number associated with the identification information may generate a virtual machine the version number of which is unnecessary on the client computer 1. In this case, the following method can be used. In response to operation input indicative of displaying an unused virtual machine list, the management table is compared with the virtual machines installed on the client computer 1 and a list of virtual machines for which corresponding products do not reside is displayed. As a result, a user can easily recognize virtual machines which are not associated with the identification information for the distribution object programs.

The distribution object software can be distributed by, for example, a Web server function. In this case, the client computer acquires the distribution object software by using a Web browser. An embodiment in which the present invention is applied to Web technologies will now be described concretely.

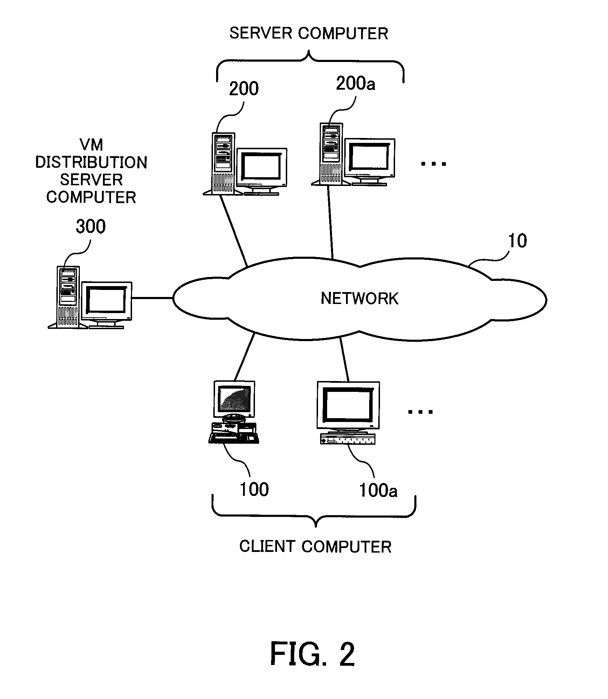

Fig. 2 is a view showing an example of the structure of a system according to the embodiment. In this embodiment, client computers 100, 100a, etc., server computers 200, 200a, etc., and a VM (virtual machine) distribution server computer 300 are connected via a network 10.

A Web browser application (Web browser) is installed on each of the client computers 100, 100a, etc. Each of the client computers 100, 100a, etc. acquires content from one of the server computers 200, 200a, etc. via the network 10 in response to operation input provided by a user. In addition, each of the client computers 100, 100a, etc. acquires a virtual machine program from the VM distribution server computer 300 and can internally build a virtual machine function. When each of the client computers 100, 100a, etc. acquires a program from one of the server computers 200, 200a, etc., it starts a virtual machine corresponding to the acquired program and executes the program.

Each of the server computers 200, 200a, etc. provides content by using a Web server application (Web server). The content includes a program such as a Java application.

A Web server is installed on the VM distribution server computer 300. The VM distribution server computer 300 provides a virtual machine (VM) program to each of the client computers 100, 100a, etc.

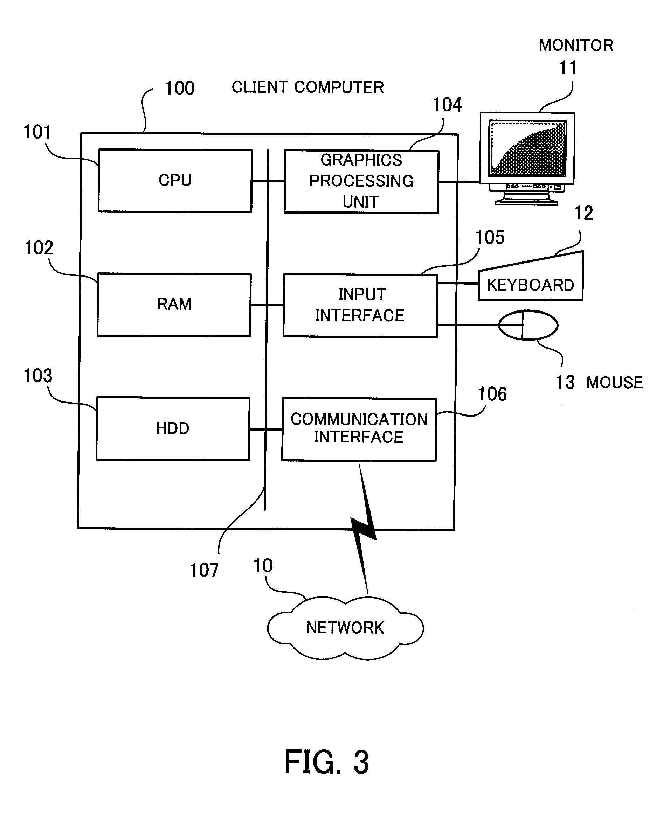

Fig. 3 is a view showing an example of the hardware configuration of a client computer used in the embodiment of the present invention. The whole of a client computer 100 is controlled by a central processing unit (CPU) 101. A random access memory (RAM) 102, a hard disk drive (HDD) 103, a graphics processing unit 104, an input interface 105, and a communication interface 106 are connected to the CPU 101 via a bus 107.

The RAM 102 temporarily stores at least part of an operating system (OS) or an application program executed by the CPU 101. The RAM 102 also stores various pieces of data which the CPU 101 needs to perform a process. The HDD 103 stores the OS and application programs.

A monitor 11 is connected to the graphics processing unit 104. In accordance with instructions from the CPU 101, the graphics processing unit 104 displays an image on a screen of the monitor 11. A keyboard 12 and a mouse 13 are connected to the input interface 105. The input interface 105 sends a signal sent from the keyboard 12 or the mouse 13 to the CPU 101 via the bus 107.

The communication interface 106 is connected to a network 10. The communication interface 106 exchanges data with another computer via the network 10.

By adopting the above-mentioned hardware configuration, the processing function of this embodiment can be realized. In Fig. 3, an example of the hardware configuration of the client computer 100 is shown. However, the other client computers 100a etc., the server computers 200, 200a, etc., and the VM distribution server computer 300 can also be realized by adopting the same hardware configuration.

This embodiment will now be described concretely with the case where the client computer 100 downloads a program from the server computer 200 and executes the program by using a virtual machine as an example.

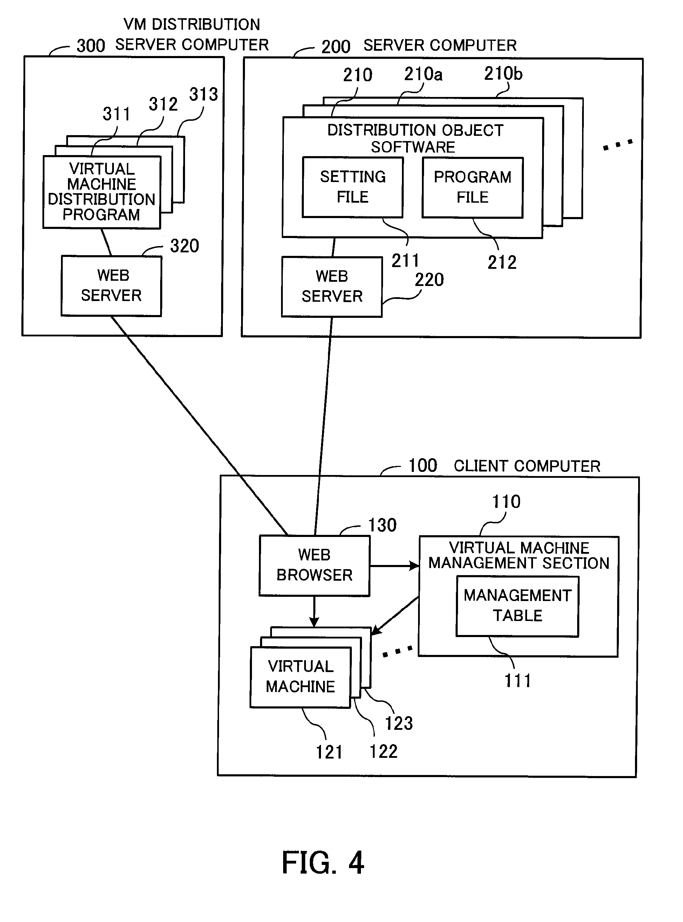

Fig. 4 is a block diagram showing the functional structure of each computer. The client computer 100 includes a virtual machine management section 110 and a plurality of virtual machines 121, 122, 123, etc.

The virtual machine management section 110 determines a virtual machine used for executing a program distributed by the server computer 200 by the use of a management table 111. The version numbers of the virtual machines 121, 122, 123, etc. are managed in the management table 111.

Each of the virtual machines 121, 122, 123, etc. executes a program distributed by the server computer 200. The version numbers of the virtual machines 121, 122, 123, etc. differ from one another.

A Web browser 130 gains access to the server computer 200 or the VM distribution server computer 300 by the use of a protocol, such as the hypertext transfer protocol (HTTP), and acquires various pieces of content.

The server computer 200 includes a plural pieces of distribution object software 210, 210a, 210b, etc. and a Web server 220.

The plural pieces of distribution object software 210, 210a, 210b, etc. are software products to be distributed to the client computer 100. A setting file 211 and a program file 212 are associated with the distribution object software 210 and are registered.

The product name of the program file 212, the IP address of the server computer 200, and the version number of the program file 212 are set in the setting file 211.

The program file 212 is described by the use of a code which can be executed by a virtual machine (Java language program, for example). The program file 212 includes a product name description.

The Web server 220 sends one of the plural pieces of distribution object software 210, 210a, 210b, etc. to the client computer 100 in response to a request from the client computer 100.

The VM distribution server computer 300 includes a plurality of virtual machine distribution programs 311, 312, 313, etc. and a Web server 320.

The virtual machine distribution programs 311, 312, 313, etc. are used for making the client computer 100 realize functions as the virtual machines 121, 122, 123, etc. respectively. The virtual machine distribution programs 311, 312, 313, etc. are described by the use of a code which can be executed by a client computer 100 platform.

The Web server 320 sends one of the virtual machine distribution programs 311, 312, 313, etc. to the client computer 100 in response to a request from the client computer 100.

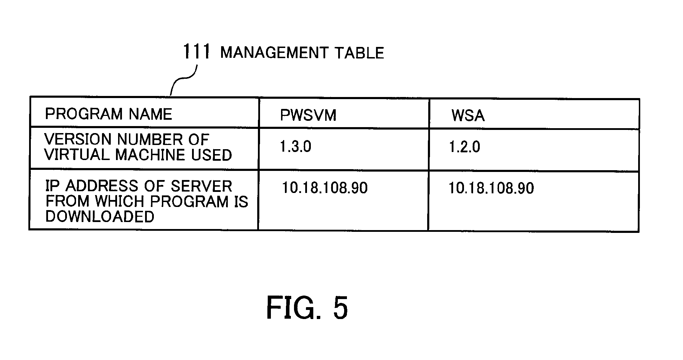

Fig. 5 is a view showing an example of the management table. In the management table 111, the name of a program (product name), the version number of a virtual machine used, and the IP address of a server from which the program is downloaded are associated with one another and are managed. When a setting file is downloaded from the server computer 200, each record is registered according to the contents of the setting file.

In the example shown in Fig. 5, the version number of a virtual machine used for a program that has the name "PWSVM" and that is downloaded from a server computer the IP address of which is "10.18.108.90" is "1.3.0". Furthermore, the version number of a virtual machine used for a program that has the name "WSA" and that is downloaded from the server computer the IP address of which is "10.18.108.90" is "1.2.0".

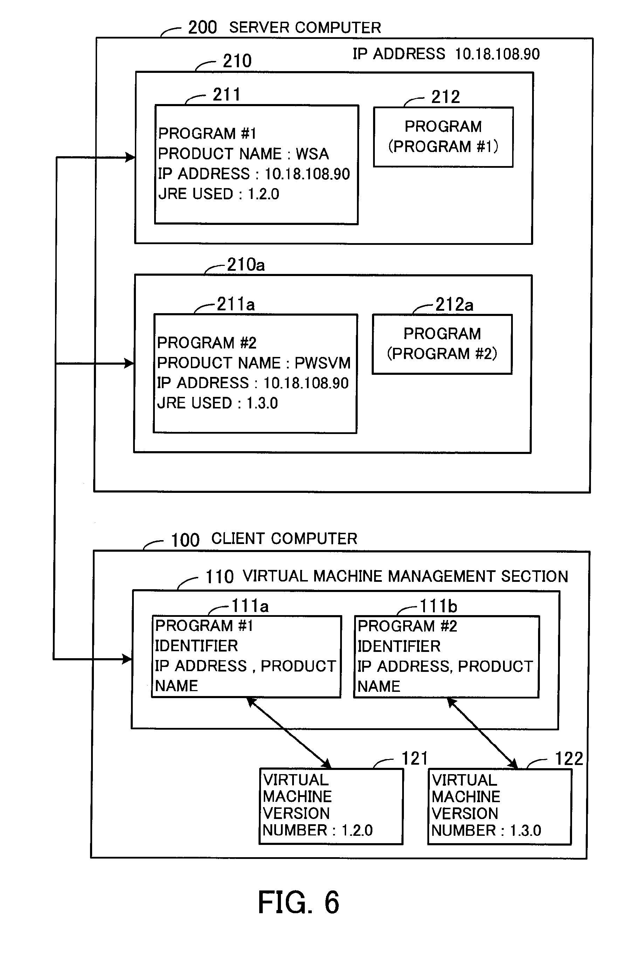

Fig. 6 is a view showing association set in the management table. In this example, the IP address of the server computer 200 is "10.18.108.90" and the two pieces of distribution object software 210 and 210a reside on the server computer 200.

The program file 212 of the distribution object software 210 is described so that it can correctly be executed by using the virtual machine 121 the version number of which is "1.2.0". The product name "WSA" of program #1, the IP address "10.18.108.90" of the server computer 200, and the version number "1.2.0" of the used virtual machine are set in the setting file 211 of the distribution object software 210.

A program file 212a of the distribution object software 210a is described so that it can correctly be executed by using the virtual machine 122 the version number of which is "1.3.0". The product name "PWSVM" of program #2, the IP address "10.18.108.90" of the server computer 200, and the version number "1.3.0" of the used virtual machine are set in a setting file 211a of the distribution object software 210a.

The virtual machine 121 the version number of which is "1.2.0" and the virtual machine 122 the version number of which is "1.3.0" are installed on the client computer 100. Records 111a and 111b corresponding to the program files 212 and 212a, respectively, provided by the server computer 200 are stored in the management table 111 of the virtual machine management section 110 of the client computer 100 shown in Fig. 5. The IP address of the server computer 200 and the product name of the program file 212 are registered as the record 111a and are associated with the virtual machine 121 the version number of which is "1.2.0". The IP address of the server computer 200 and the product name of the program file 212a are registered as the record 111b and are associated with the virtual machine 122 the version number of which is "1.3.0".

On the basis of the contents registered in the setting files 211 and 211a prepared on the server computer 200 side, the virtual machines are associated in this way with the program files 212 and 212a on the client computer 100 side.

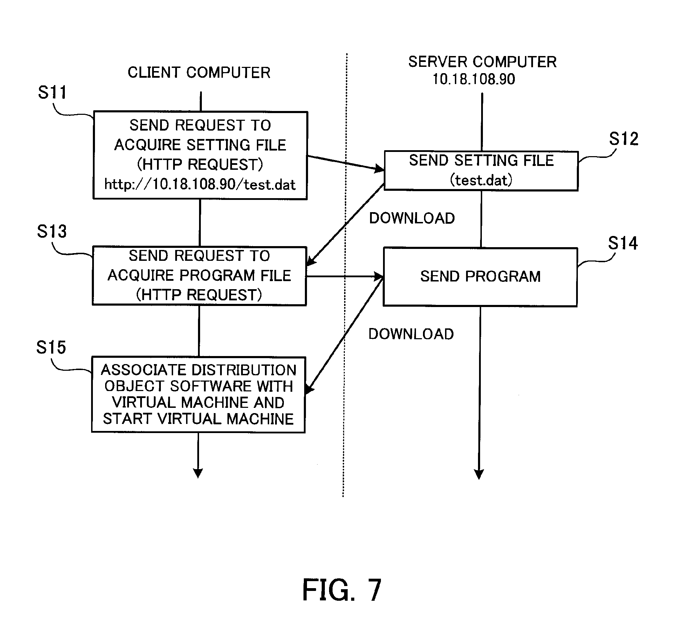

Fig. 7 is a sequence diagram showing a process performed between the client computer and the server computer. The process shown in Fig. 7 will now be described in order of step number.

[Step S11] The Web browser 130 on the client computer 100 sends a request to acquire a setting file to the server computer 200 in response to a request from the virtual machine management section 110. To be concrete, the Web browser 130 sends an HTTP request in which the URL "http://10.18.108.90/test.dat" of the server computer 200 is designated.

[Step S12] The Web server 220 on the server computer 200 sends the setting file (test.dat) to the client computer 100 in response to the request to acquire the setting file.

[Step S13] When the Web browser 130 on the client computer 100 receives the setting file, the Web browser 130 passes the setting file to the virtual machine management section 110. In addition, the Web browser 130 sends a request to acquire a program file to the server computer 200 on the basis of a URL described in the setting file acquired.

[Step S14] The Web server 220 on the server computer 200 sends the program file to the client computer 100 in response to the request from the client computer 100.

[Step S15] When the Web browser 130 on the client computer 100 receives the program file, the Web browser 130 passes the program file to the virtual machine management section 110.

On the basis of the setting file it acquired in step S13, the virtual machine management section 110 then registers or updates a record in the management table 111 to associate distribution object software with a virtual machine. In addition, the virtual machine management section 110 starts the virtual machine corresponding to the program file it acquired on the basis of contents set in the management table 111. The virtual machine management section 110 then passes the program file it acquired to the virtual machine and makes the virtual machine perform a process described in the program file.

If the virtual machine corresponding to the acquired program file is not installed on the client computer 100, then the virtual machine the version number of which is necessary can be installed automatically. The procedure of a process performed on the client computer 100 side will now be described.

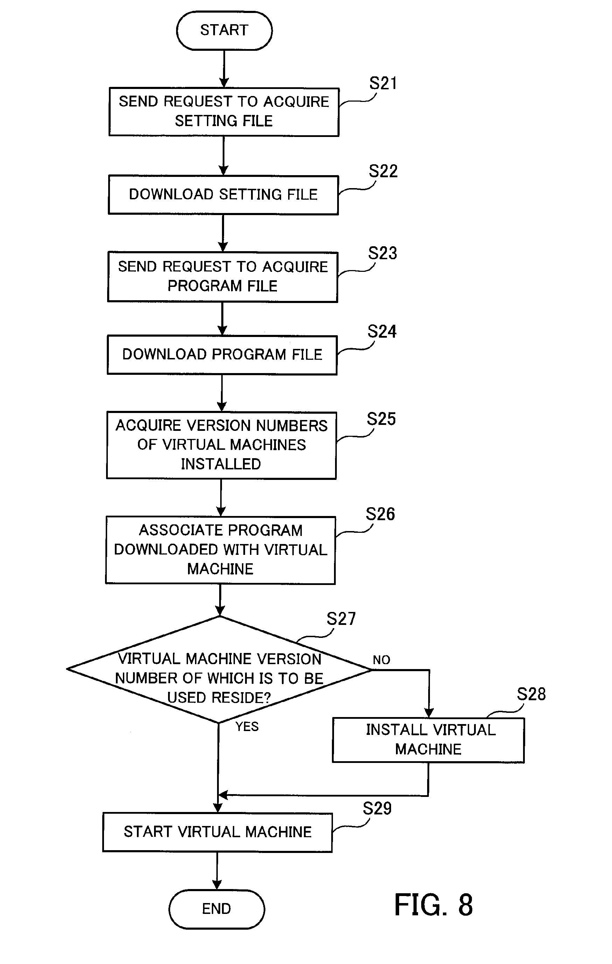

Fig. 8 is a flow chart showing the procedure of a process performed by the client computer. The process shown in Fig. 8 will now be described in order of step number.

[Step S21] The virtual machine management section 110 of the client computer 100 sends the request (HTTP request) to acquire the setting file to the server computer 200 via the Web browser 130.

[Step S22] The Web browser 130 downloads the setting file from the server computer 200 and passes the setting file to the virtual machine management section 110.

[Step S23] The Web browser 130 sends the request (HTTP request) to acquire the program file on the basis of the URL described in the setting file.

[Step S24] The Web browser 130 downloads the program file from the server computer 200 and passes the program file to the virtual machine management section 110.

[Step S25] The virtual machine management section 110 acquires the version numbers of virtual machines installed on the client computer 100.

[Step S26] The virtual machine management section 110 associates the program file with the virtual machine on the basis of the setting file it acquired in step S22.

[Step S27] The virtual machine management section 110 determines whether the virtual machine the version number of which is to be used resides (is installed) on the client computer 100. If the virtual machine the version number of which is to be used resides on the client computer 100, then step S29 is performed. If the virtual machine the version number of which is to be used does not reside on the client computer 100, then step S28 is performed.

[Step S28] The virtual machine management section 110 installs the virtual machine the version number of which is to be used. To be concrete, the virtual machine management section 110 gains access to the VM distribution server computer 300 via the Web browser 130 and outputs a request to acquire an installer for a virtual machine distribution program the version number of which is to be used. The VM distribution server computer 300 sends the virtual machine distribution program designated to the client computer 100. The virtual machine management section 110 of the client computer 100 acquires the virtual machine distribution program via the Web browser 130. The virtual machine management section 110 then installs the virtual machine distribution program it acquired on the OS on the client computer 100.

[Step S29] The virtual machine management section 110 starts the virtual machine the version number of which is to be used, and requests the virtual machine to perform the process described in the program file it acquired in step S24.

In the server computer 200 shown in Fig. 6, it is assumed that patches are made in the program files 212 and 212a and that descriptions corresponding to the version numbers "1.2.0" and "1.3.0" are changed to descriptions corresponding to the version numbers "1.4.0" and "1.4.2" respectively. In this case, the virtual machine management section 110 of the client computer 100 changes the association between the program files and the virtual machines.

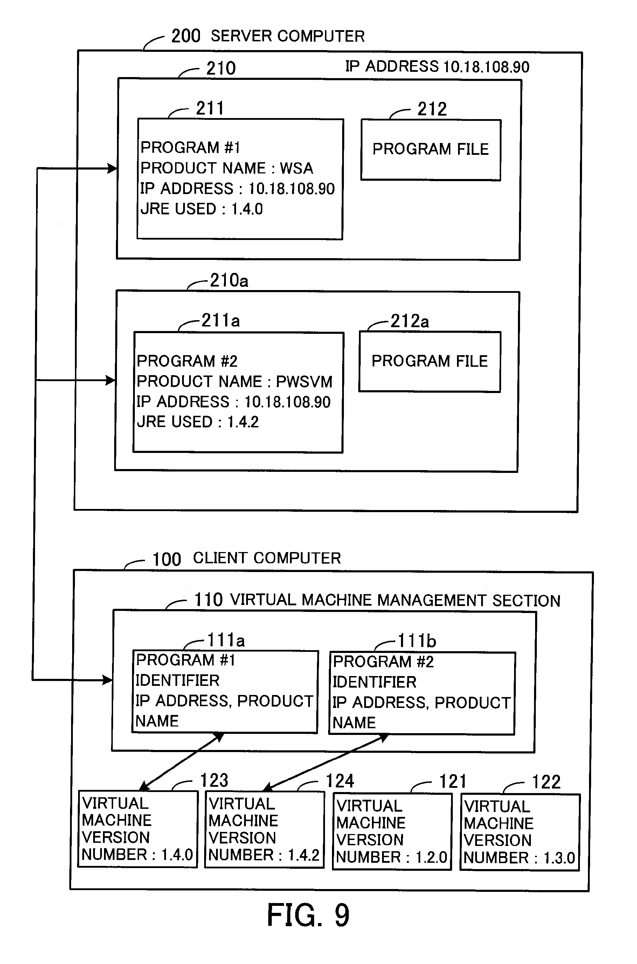

Fig. 9 is a view showing association after the update of the program files. When the program files 212 and 212a are updated, the version number of the used virtual machine set in the setting file 211 of the distribution object software 210 is changed to "1.4.0" on the basis of, for example, operation input provided by a manager of the server computer 200. Similarly, the version number of the used virtual machine set in the setting file 211a of the distribution object software 210a is changed to "1.4.2".

When the setting file 211 is downloaded afterward, the virtual machine management section 110 of the client computer 100 installs the virtual machine 123 the version number "1.4.0" of which is indicated in the setting file 211. The program file 212 is then associated with the virtual machine 123.

Similarly, when the setting file 211a is downloaded, the virtual machine management section 110 of the client computer 100 installs the virtual machine 124 the version number "1.4.2" of which is indicated in the setting file 211a. The program file 212a is then associated with the virtual machine 124.

The version numbers of the virtual machines used for performing processes described in the program files 212 and 212a are properly updated in this way. In addition, the association between the program files and the virtual machines is indicated by the IP address of the server computer and the product names of the distribution object software. Therefore, even if pieces of distribution object software which have the same product name and which differ from one another in version number reside on different server computers, a client computer can execute these pieces of distribution object software by using virtual machines the version numbers of which are appropriate.

Furthermore, there in no need to change product names according to an environment in which a server computer operates. Product names differ from IP port numbers in this respect. Accordingly, a fixed product name can be set for each piece of distribution object software. As a result, even if there is, for example, a change in environment in which a server computer operates (change in port number of distribution object software, for example), association between program files and virtual machines can be maintained.

The above system can be applied to association performed in the case of, for example, executing a Java language program by the use of the JRE. In this case, the manager of the server computer 200 registers a setting file in which a product name, an expected version number of the JRE, a place where a program file of the Java language program resides are clearly described on the server computer 200.

After that, the client computer 100 gains HTTP access to the setting file registered on the server computer 200, and the setting file and the program file are downloaded to the client computer 100. The client computer 100 automatically retrieves the JRE in which the Java language program operates, and associates the Java language program with the JRE. As a result, a version number of the JRE to be used for executing each Java language program becomes definite on the client computer 100.

By the way, an unused version virtual machine can be detected by the use of the management table 111. Accordingly, the virtual machine management section 110 regularly retrieves an unnecessary virtual machine and removes (uninstalls) a virtual machine detected.

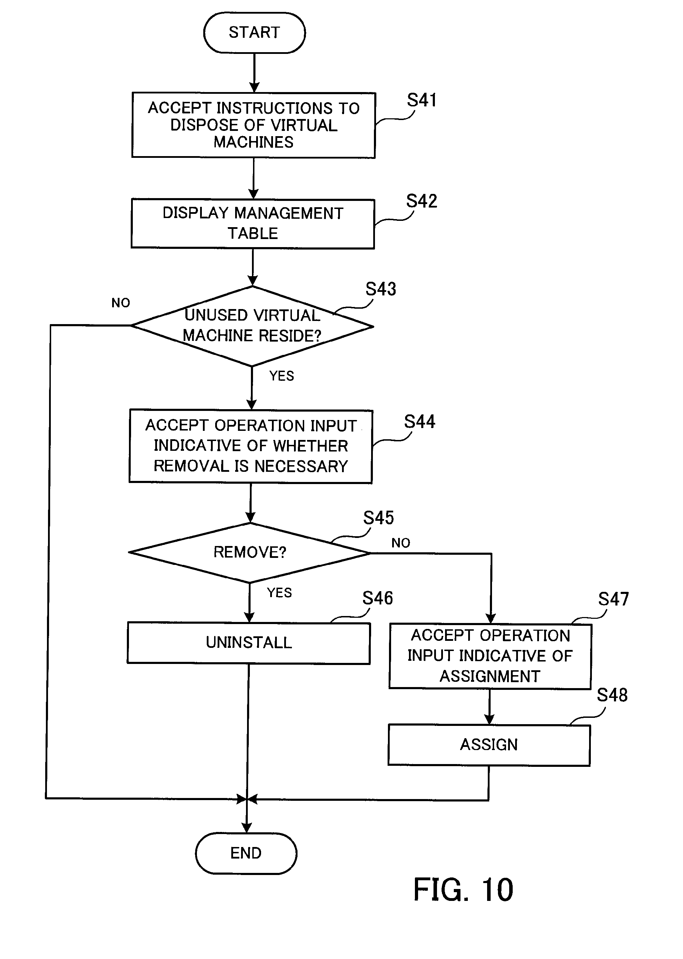

Fig. 10 is a flow chart showing the procedure of the process of automatically uninstalling a virtual machine. The process shown in Fig. 10 will now be described in order of step number.

[Step S41] The virtual machine management section 110 accepts instructions to dispose of virtual machines. The instructions to dispose of virtual machines are inputted to the virtual machine management section 110 by, for example, operation input from a user.

[Step S42] The virtual machine management section 110 displays the contents of the management table 111 on a screen.

[Step S43] The virtual machine management section 110 determines whether an unused virtual machine resides. To be concrete, the virtual machine management section 110 determines whether a virtual machine the version number of which is not registered in the "version number of virtual machine used" row of the management table 111 resides. If an unused virtual machine resides, then step S44 is performed. If an unused virtual machine does not reside, then the process terminates.

[Step S44] The virtual machine management section 110 displays a list of unused virtual machines on the screen. The virtual machine management section 110 then accepts operation input from a user indicative of whether removal is necessary for each of the unused virtual machines.

[Step S45] The virtual machine management section 110 interprets the contents of the operation input. If removal is designated, then step S46 is performed. If action other than removal is designated, then step S47 is performed.

[Step S46] The virtual machine management section 110 uninstalls a virtual machine the removal of which is designated, and terminates the process.

[Step S47] The virtual machine management section 110 accepts operation input indicative of assignment of an unused virtual machine. That is to say, even if the version number of a virtual machine is not registered in the management table 111, the user himself/herself may know that the virtual machine is used for executing software which is not managed by virtual machine management section 110. In this case, the user manually inputs the product name of the software not managed by the virtual machine management section 110 and the IP address of a server which distributes the product, and designates the virtual machine used for executing the software.

[Step S48] The virtual machine management section 110 registers a record indicative of association between the software and the virtual machine in the management table 111 in accordance with step S47.

Whether to remove an old version virtual machine can be inquired in this way and used version virtual machines become clear. Furthermore, a list of unused virtual machines is displayed, so an unused virtual machine can easily be assigned to software.

The product name of a program file is included in, for example, descriptions in the program file. The product name may be described in management information set as a profile of the program file. In addition, an identifier indicative of the product name of the program file may be included in the file name (including an extension) of the program file. In this case, the identifier can be used as the product name.

The above functions can be realized with a computer. In this case, a program in which the contents of the functions the client should have are described is provided. By executing this program on the computer, the above functions are realized on the computer. This program can be recorded on a computer readable record medium. A computer readable record medium can be a magnetic recording device, an optical disk, a magneto-optical recording medium, a semiconductor memory, or the like. A magnetic recording device can be a hard disk drive (HDD), a flexible disk (FD), a magnetic tape, or the like. An optical disk can be a digital versatile disk (DVD), a digital versatile disk random access memory (DVD-RAM), a compact disk read only memory (CD-ROM), a compact disk recordable (CD-R)/rewritable (CD-RW), or the like. A magneto-optical recording medium can be a magneto-optical disk (MO) or the like.

To place the program on the market, portable record media, such as DVDs or CD-ROMs, on which it is recorded are sold. Alternatively, the program is stored in advance on a hard disk in a server computer and is transferred from the server computer to another computer via a network.

When the computer executes this program, it will store the program, which is recorded on a portable record medium or which is transferred from the server computer, on, for example, its hard disk. Then the computer reads the program from its hard disk and performs processes in compliance with the program. The computer can also read the program directly from a portable record medium and perform processes in compliance with the program. Furthermore, each time the program is transferred from the server computer, the computer can perform processes in turn in compliance with the program it receives.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### DESCRIPTION OF THE SYMBOLS

- 1: client computer
- 1a-1d: virtual machine
- 1e: setting file acquisition section
- 1f: virtual machine association section
- 1g: execution control section
- 2: server computer
- 2a, 2b: distribution object software
- 2aa, 2ba: setting file
- 2ab, 2bb: distribution object program

## Claims

1. A virtual machine management program for making a virtual machine execute a program downloaded from a server computer, the virtual machine management program making a computer function as:
a setting file acquisition section for acquiring a setting file including identification information for a distribution object program and a version number of a virtual machine to be used for executing the distribution object program from the server computer;
a virtual machine association section for registering association of the identification information with the version number in a management table on the basis of the setting file acquired by the setting file acquisition section; and
an execution control section for acquiring the distribution object program from the server computer, referring to the management table, selecting the virtual machine having the version number corresponding to the identification information for the distribution object program from among a plurality of virtual machines having different version numbers, and making the selected virtual machine execute the acquired distribution object program.

2. The virtual machine management program according to claim 1, wherein:
the identification information includes a name of the distribution object program and server identification information for identifying the server computer which provides the distribution object program on a network; and
the execution control section refers to the management table and selects the virtual machine having the version number corresponding to a combination of the identification information for the distribution object program and the server identification information for identifying the server computer which provides the distribution object program from among the plurality of virtual machines having different version numbers.

3. The virtual machine management program according to claim 1, further making the computer function as a virtual machine installation section for acquiring, in a case of the virtual machine having the version number to be used for executing the acquired distribution object program not being installed, a distribution program for the virtual machine having the version number via the network and for installing the virtual machine on the basis of the acquired virtual machine distribution program.

4. The virtual machine management program according to claim 1, wherein if a setting file on identification information already registered in the management table is newly acquired, the virtual machine association section changes the version number associated with the identification information in the management table on the basis of the setting file newly acquired.

5. The virtual machine management program according to claim 1, further making the computer function as an unused virtual machine display section for comparing the management table with virtual machines installed in response to operation input indicative of display of a list of unused virtual machines and for displaying a list of virtual machines for which corresponding products do not reside.

6. A virtual machine management method for making a virtual machine execute a program downloaded from a server computer by using a computer, wherein:
a setting file acquisition section acquires a setting file including identification information for a distribution object program and a version number of a virtual machine to be used for executing the distribution object program from the server computer;
a virtual machine association section registers association of the identification information with the version number in a management table on the basis of the setting file acquired by the setting file acquisition section; and
an execution control section acquires the distribution object program from the server computer, refers to the management table, selects the virtual machine having the version number corresponding to the identification information for the distribution object program from among a plurality of virtual machines having different version numbers, and makes the selected virtual machine execute the acquired distribution object program.

7. A virtual machine management apparatus for making a virtual machine execute a program downloaded from a server computer, the apparatus comprising:
a setting file acquisition section for acquiring a setting file including identification information for a distribution object program and a version number of a virtual machine to be used for executing the distribution object program from the server computer;
a virtual machine association section for registering association of the identification information with the version number in a management table on the basis of the setting file acquired by the setting file acquisition section; and
an execution control section for acquiring the distribution object program from the server computer, referring to the management table, selecting the virtual machine having the version number corresponding to the identification information for the distribution object program from among a plurality of virtual machines having different version numbers, and making the selected virtual machine execute the acquired distribution object program.

8. A computer-readable recording medium on which a virtual machine management program for making a virtual machine execute a program downloaded from a server computer is recorded, the virtual machine management program making a computer function as:
a setting file acquisition section for acquiring a
setting file including identification information for a distribution object program and a version number of a virtual machine to be used for executing the distribution object program from the server computer;
a virtual machine association section for registering association of the identification information with the version number in a management table on the basis of the setting file acquired by the setting file acquisition section; and
an execution control section for acquiring the distribution object program from the server computer, referring to the management table, selecting the virtual machine having the version number corresponding to the identification information for the distribution object program from among a plurality of virtual machines having different version numbers, and making the selected virtual machine execute the acquired distribution object program.
